# EUROPEAN PATENT APPLICATION

(11) **EP 4 250 244 A1**
(43) Date of publication of application: **27.09.2023**
(21) Application number: 23161585.7
(22) Date of filing: 13.03.2023
(51) Int. Cl.: G06V 10/25, G06V 10/82

(54) **VISION BASED TESTING AUGMENTED WITH OUT OF VISIBLE BAND SIGNALING**

(30) Priority: 21.03.2022 US 202217699899
(71) Applicant: Rockwell Collins, Inc., Cedar Rapids, IA 52498 (US)
(72) Inventor: MYREN, Jason A., Marion, IA (US)
(74) Representative: Dehns

(57) **Abstract**

A system and method for determining a compliance of a display (90) to a reference is disclosed. The system includes a camera (104) configured to record images from a display (90), wherein the display (90) is configured to simultaneously display a visually perceivable image and a visually imperceivable image based on an input signal. The test system further includes a controller (116) with processors (140) and a memory (136). The memory (136) has instructions stored upon that instruct the processors (140) to receive the display signal, generate imperceivable image data and perceivable image data based on the display signal, use the imperceivable image data to guide an analysis of the perceivable image data, and determine a compliance score of the display based on a deviation between the perceivable image data and perceivable input of the input signal. The imperceivable image may be a UV image, an infrared image, or an image based on an imperceivable frame rate.

## Description

### BACKGROUND

Testing of display systems involve imputing an input signal into a display, observing and/or recording an output (e.g., a display image) based on the input signal, comparing the input signal to the predicted output, and determining if the comparison between the input signal and the output pass, or is compliant with, company and/or industry standards. Traditionally, testing of display systems are performed manually, with a technician observing the output, detecting differences between the input signal and the output, grading the display system, and in some situations, ascertaining why the detected differences have occurred. Manual testing of display systems is highly time-consuming, with high labor costs. Computer automated systems for testing systems have proved problematic. For example, for an aircraft cockpit monitor displaying a mixture of text and symbology, current optical character recognition technology has a tendency to mistake a symbol for text, resulting in a false positive for error checking. Therefore, it is desirable to provide a system that efficiently detects errors in a display without the limitations of current testing technologies.

### SUMMARY

A test system is disclosed. In one or more embodiments, the test system includes a camera. In one or more embodiments, the camera is configured to record images from a display and transmit a display signal based on recorded images. In one or more embodiments, the display is configured to simultaneously display a visually perceivable image and a visually imperceivable image based on an input signal. In one or more embodiments, the test system further includes a controller configured to receive the display signal and determine a compliance of the display to a reference. In one or more embodiments, the controller includes one or more processors, and a memory. In one or more embodiments, the memory has instructions stored upon, with instructions executed by the one or more processors. In one or more embodiments, the instructions include receiving the display signal; In one or more embodiments, the instructions further include generating imperceivable image data and perceivable image data based on the display signal. In one or more embodiments, the instructions further include using the imperceivable image data to guide an analysis of the perceivable image data. In one or more embodiments, the instructions further include determining a compliance score of the display based on a deviation between the perceivable image data and perceivable input of the input signal. In one or more embodiments, the instructions further include reporting the compliance score of the display.

In some embodiments of the test system, using the imperceivable image data to guide an analysis of the perceivable image data includes utilizing artificial intelligence to train a computer vision model to perform a grading function of the perceivable image by performing a training step using reference data from a training set of training images. In some embodiments of the test system, using the imperceivable image data to guide an analysis of the perceivable image data further includes testing the perceivable image via the computer vision model.

In some embodiments of the test system, the imperceivable image is configured to be presented in a non-visible wavelength.

In some embodiments of the test system, the non-visible wavelength is configured as an infrared wavelength.

In some embodiments of the test system the non-visible wavelength is configured as an ultraviolet wavelength.

In some embodiments of the test system, the imperceivable image is configured to be presented as an image with an imperceivable frame rate.

In some embodiments of the test system, the controller is configured to parse frames containing the imperceivable data from the recorded images.

In some embodiments of the test system, the test system further includes an optical filter disposed between the display and the camera configured to filter out visible wavelengths.

In some embodiments of the test system, utilizing artificial intelligence includes developing a neural network model for object detection.

In some embodiments of the test system, developing the neural network model includes training the network model via a you only look once (YOLO) algorithm.

A method to determining a compliance of a display to a reference is disclosed. In one or more embodiments, the method includes receiving a visually perceivable image and a visually imperceivable image, wherein the visually perceivable image and the visually imperceivable image are based on an input signal. In one or more embodiments, the method further includes converting the visually imperceivable image and a perceivable image to a display signal. In one or more embodiments, the method further includes transmitting the display signal to a controller. In one or more embodiments, the method further includes generating imperceivable image data and perceivable image data based on the display signal. In one or more embodiments, the method further includes using the imperceivable image data to guide an analysis of the perceivable image data. In one or more embodiments, the method further includes determining a compliance score of the display based on a deviation between the perceivable image data and a perceivable input/ In one or more embodiments, the method further includes reporting the compliance score of the display.

In some embodiments, the method further includes utilizing artificial intelligence to train a computer vision model to perform a grading function of the perceivable image by performing a training step using reference data from a training set of training images. In some embodiments, the method further includes analyzing the perceivable image via the computer vision model.

In some embodiments of the method, the visually imperceivable image is configured to be presented in a non-visible wavelength.

In some embodiments of the method, the non-visible wavelength is configured as an infrared wavelength.

In some embodiments of the method, the imperceivable image is configured to be presented as an image with an imperceivable frame rate.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a block illustration of a display and a system configured to test the display, in accordance with one or more embodiments of the disclosure;
FIG. 2 are drawings of screenshot data of a display under test by the test system, in accordance with one or more embodiments of the disclosure;
FIG. 3 are drawings of screenshot data of a display under test by the test system, in accordance with one or more embodiments of the disclosure;
FIG. 4 are drawings of screenshot data of a display under test by the test system representing both a perceivable image and an imperceivable image, in accordance with one or more embodiments of the disclosure;
FIG. 5 are drawings of screenshot data of a display under test by the test system, with one frame representing an imperceivable image, in accordance with one or more embodiments of the disclosure;
FIG. 6 are drawings of screenshot data of a display under test by the test system, representing both perceivable images and av imperceivable image, in accordance with one or more embodiments of the disclosure;
FIG. 7 is a flow chart illustrating a method for determining the compliance of a display to a reference, in accordance with one or more embodiments of the disclosure; and
FIG. 8 is a flow chart illustrating a method for incorporating a computer vision model into the system, in accordance with one or more embodiments of the disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

A system and method for testing a display is disclosed. The system includes a camera that record both visually perceivable and visually imperceivable data/images from a display. The visually imperceivable data/images may include images that are presented outside of the visual range (e.g., infrared or ultraviolet images), images that are presented in an imperceivable frame rate, or other data/medium such as sound. The visually imperceivable data/images serve to guide the system in analyzing the perceivable images (e.g., the imperceivable data/images instruct the system on which symbology or text to analyze within the perceivable images. Once the imperceivable data/image has been recorded and a display signal generated, the camera transmits the display signal to a controller with processors that determine whether the displayed image matches, or correctly corresponds to, the input signal to the display.

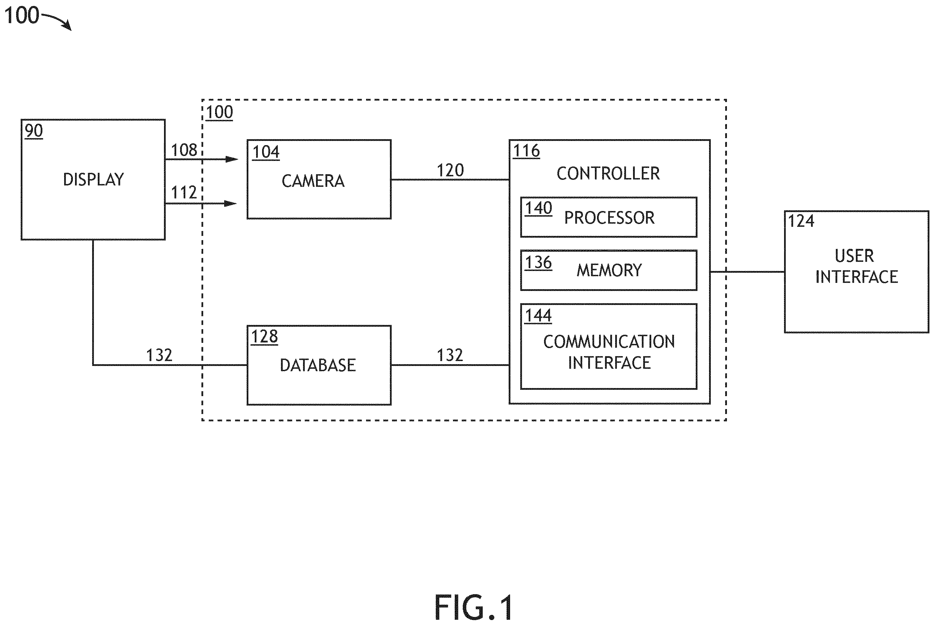

FIG. 1 is a block illustration of a display 90 and a system 100 configured to test the display 90, in accordance with one or more embodiments of the disclosure. The system includes a camera 104 to record images, both visually perceivable images 108 and visually imperceivable images 112 as displayed by the display 90, and generates a display signal 120 based on the visually perceivable images 108 and/or visually imperceivable images 112. For example, the display signal 120 may contain a single data stream that combines the visually perceivable images 108 and/or visually imperceivable images 112. In another example, the display signal 120 may contain a two data streams each separately streaming the visually perceivable images 108 and/or visually imperceivable images 112. In another example, the display signal 120 only includes data from the visually imperceivable images 112.

The system 100 further includes a controller 116 configured to provide processing functionality for the system 100. The controller 116 receives the display signal 120 from the camera 104 and performs multiple functions described herein, including but not limited to determining the compliance of the display signal 120 to a reference and reporting a compliance score to a user interface 124.

The system 100 further includes a database 128 comprising input signal 120 that is transmitted to the display 90, which in turn is displayed by the display 90 as the visually perceivable images 108 and/or visually imperceivable images 112. The database 128 may be configured as, or saved upon, an external memory device within the system 100 or as incorporated into the componentry of the controller 116, such as a memory 136. The input signal 120, or at least a portion of the input signal 120 that codes for the visually imperceivable images 112, is utilized by controller 116 (e.g., and sent to the controller 116 if the database 128 is external to the controller 116), where the controller compares the input signal 120 or a portion or the input data to the display signal 120 in determining the compliance of the display signal 120 to the reference. The system 100 may include different combinations of componentry as disclosed in this disclosure. For example, the system may include the user interface 124 and/or the display 90. Therefore, the above description should not be interpreted as a limitation on the embodiments of the present disclosure, but merely as an illustration.

The controller 116 includes one or more processors 140, the memory 136, and a communication interface 144. The one or more processors 140 may include any processor or processing element known in the art. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the one or more processors 140 may include any device configured to execute algorithms and/or instructions (e.g., program instructions stored in memory). In one embodiment, the one or more processors 140 may be embodied as a desktop computer, mainframe computer system, workstation, image computer, parallel processor, networked computer, or any other computer system configured to execute a program configured to operate or operate in conjunction with the system 100, as described throughout the present disclosure. Moreover, different subsystems of the system 100 (e.g., the camera 104 and/or user interface 124) may include a processor 140 or logic elements suitable for carrying out at least a portion of the steps described in the present disclosure. Therefore, the above description should not be interpreted as a limitation on the embodiments of the present disclosure but merely as an illustration.

The memory 136 can be an example of tangible, computer-readable storage medium that provides storage functionality to store various data and/or program code associated with operation of the controller 118 and/or other components of the system 100, such as software programs and/or code segments, or other data to instruct the controller and/or other components to perform the functionality described herein. Thus, the memory 136 can store data, such as a program of instructions for operating the system 100 or other components. It should be noted that while a single memory 136 is described, a wide variety of types and combinations of memory 136 (e.g., tangible, non-transitory memory) can be employed. The memory 136 can be integral with the controller, can comprise stand-alone memory, or can be a combination of both. Some examples of the memory 136 can include removable and non-removable memory components, such as a programmable logic device, random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface 144 can be operatively configured to communicate with components of the controller 116 and other components of the system 100. For example, the communication interface 144 can be configured to retrieve data from the controller 116 or other components, transmit data for storage in the memory 136, retrieve data from storage in the memory 136, and so forth. The communication interface 144 can also be communicatively coupled with controller 116 and/or system elements to facilitate data transfer between system components.

The display 90 may be configured as any type of display including but not limited to a liquid crystal display (LCD) (e.g., a light-emitting diode (LED) backlit LCD, a thin-film resistor (TFT) LCD, or a quantum dot LED backlit (QLED) LCD), an LED display (e.g., organic light-emitting diode (OLED) display, or active-matrix OLED (AMOLED)) display, a digital light processing (DLP) display, a plasma display panel (PDP), a cathode ray tube display, or a microLED display. The display may also be configured as any type of projected display including but not limited to head up displays (HUDs), head worn displays (HWDs), synthetic vision systems (SVS), enhances vision systems (EVS), virtual reality (VR) display systems, augmented reality (AR) display systems, and the like. The display 90 may be configured as any size or shape.

The camera 104 may be configured as any type of recording device with sensors configured to record the data from the display, including the visually imperceivable images 112. For example, the camera 104 may comprise charged-coupled devices (CCDs), complementary metal oxide semiconductor (CMOS)-based sensors.

In embodiments, the display 90 is configured to output imperceivable images and/or data that cannot be perceivable by humans. For example, the imperceivable images 112 may include images that are displayed outside of the visual electromagnetic spectrum, including but not limited to infrared light (e.g., light having wavelengths from ~700 nm to 1000 nm) and ultraviolet (UV) light (e.g., light having wavelengths from 100 nm to ~400 nm). For instance, the display 90 may be comprise UV elements, such as UV-LEDs, that were initially configured to warm up the display 90 for use. These UV elements can be further configured to turn on during a test, sending texts, shaped, or symbology that enhance the testing capabilities of the test system 100. In another instance, the display 90 may comprise infrared elements (e.g., infrared LEDS or infrared lasers) initially configured to display infrared text, shapes, or symbols that can be ready by a user with night-vision googles. Similar to the UV elements, the infrared elements may be further configured to turn on during a test, sending texts, shaped, or symbology that enhance the testing capabilities of the test system 100.

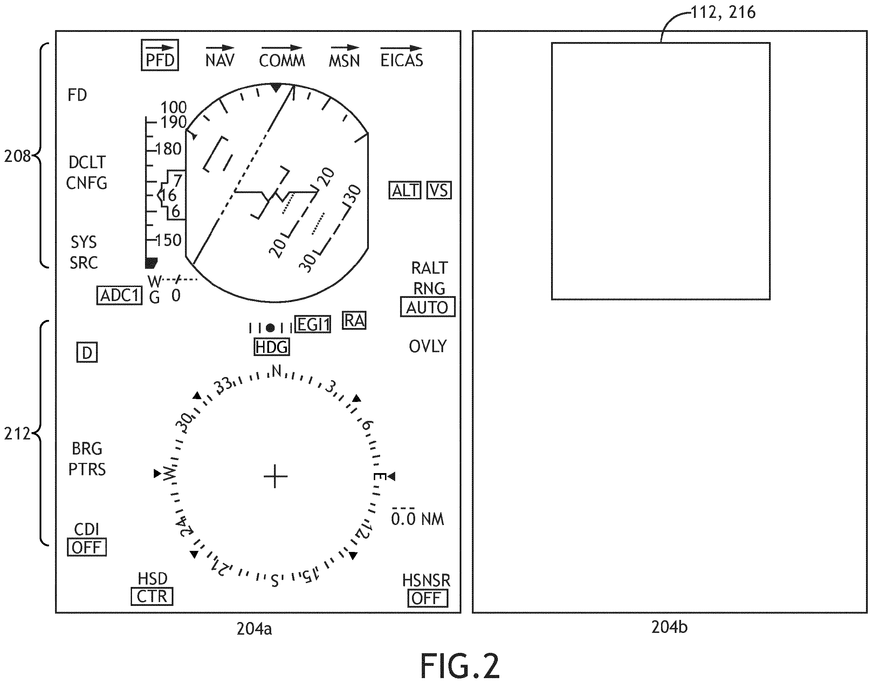

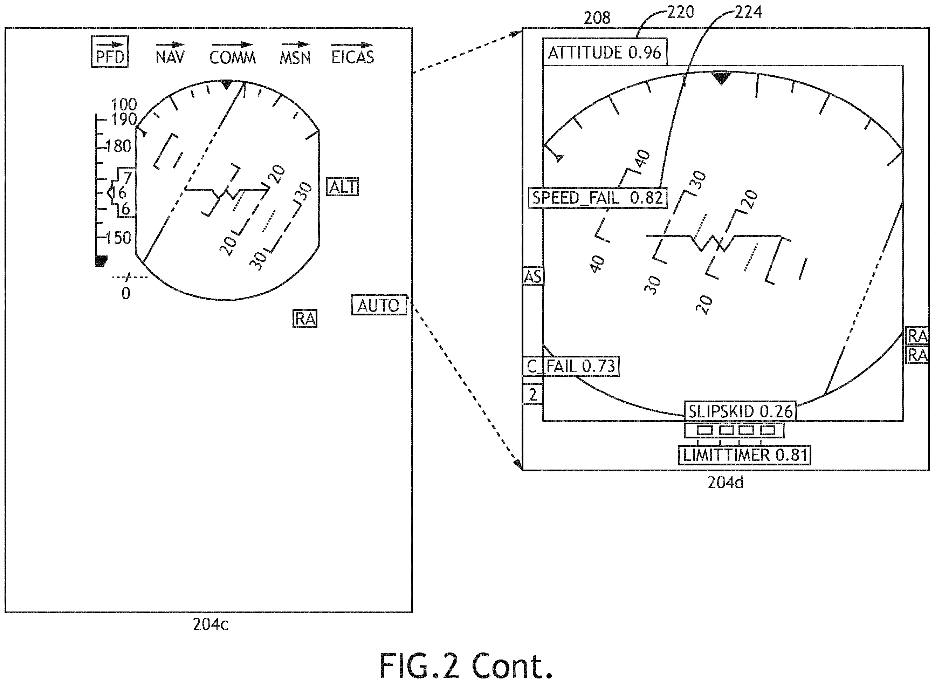

FIG. 2 are drawings of screenshot data 204a-d of a display 90 (e.g., a primary flight display) under test by the test system 100, in accordance with one or more embodiments of the disclosure. Screenshot data 204a displays the perceivable images 108 of the display, which include the artificial horizon region 208 and heading region 212. Current methods to automatically read and interpret the artificial horizon region 208 and heading region together (e.g., using optical character recognition (OCR) technology) are often overwhelmed by the mixture or text and symbology, resulting in many symbols misinterpreted as text. These misinterpretations often cause display test to needlessly fail, requiring a technician to follow-up on the reported failure.

Screenshot data 204b represents an imperceivable image 112 represented as a block outline 216 that defines the border of the artificial horizon region 208. Although not visible to the user, the block outline 216 is detected by the camera 104, and interpreted by the system 100 as a region or interest (ROI) to focus the testing protocol. The system 100 then creates a virtual image (e.g., snapshot data 204c) that it compares to input signal 120 to determine if the display 90 is working properly. Snapshot data 204d demonstrates a result of the test by the system. For example, the system 100 has reported that an altitude report flag 220 that an altitude indicator section of the artificial horizon region 208 has passed inspection, a speed_fail report flag 224 demonstrates that a speed indicator section of the artificial horizon region 208 has failed.

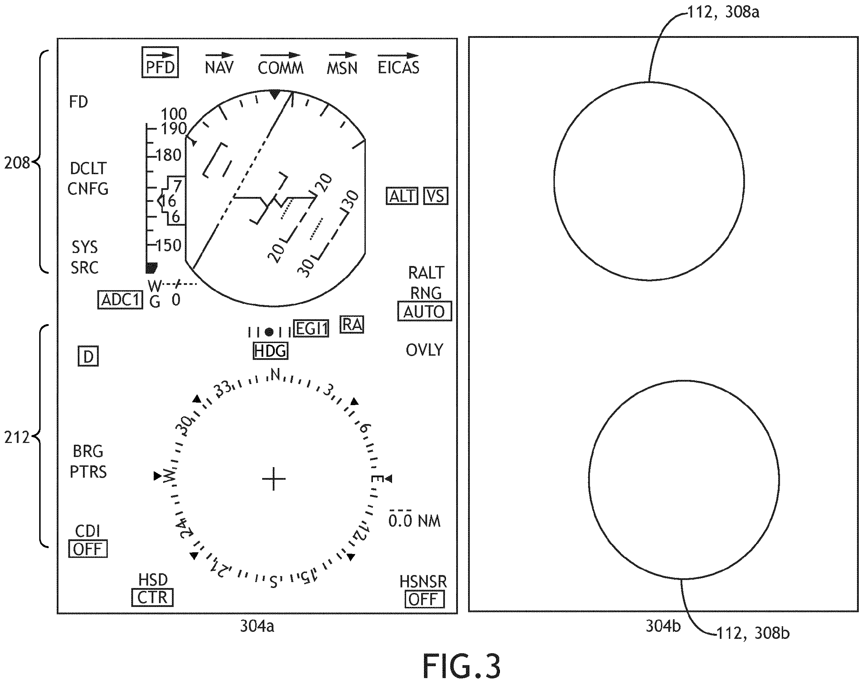

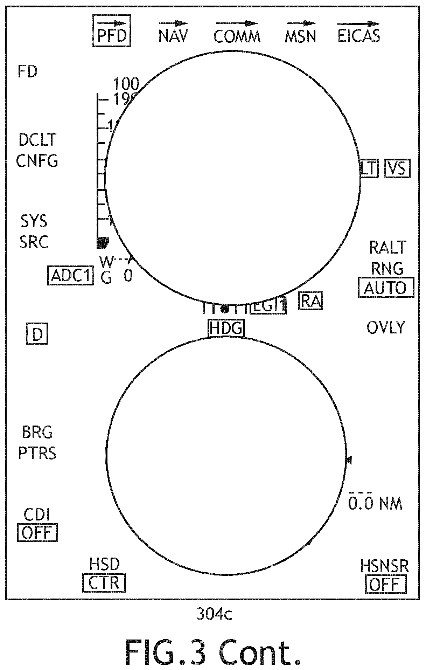

In FIG. 3, screenshot data 304a-c display similar data as screenshot data 204a-c. Imperceivable images 112, represented as circular outlines 308a-b, are interpreted by the system 100 as areas not be tested by the testing protocol. By blocking out the complex symbology region of the artificial horizon region 208 and the heading region 212, the testing software may more easily test the region for errors, particularly errors in text, without high rates of false positives causing the test to fail (e.g., due to symbology mistaken as text).

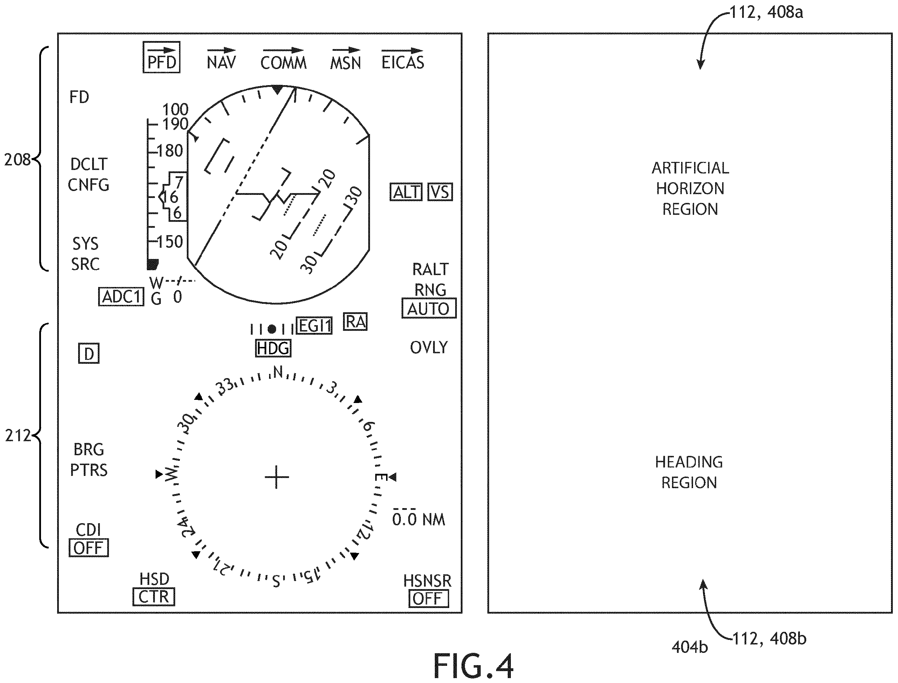

In FIG. 4, screenshot data 404a-b display similar data as screenshot data 204a-b. Imperceivable images 112, represented as descriptive text 408a-b, serve to present a descriptive function map of the image to the system 100. The function map may help the system 100 in determining which areas of the snapshot data 404a-b are represented by text, and which areas of the snapshot data 404a-b are represented by symbology, or both.

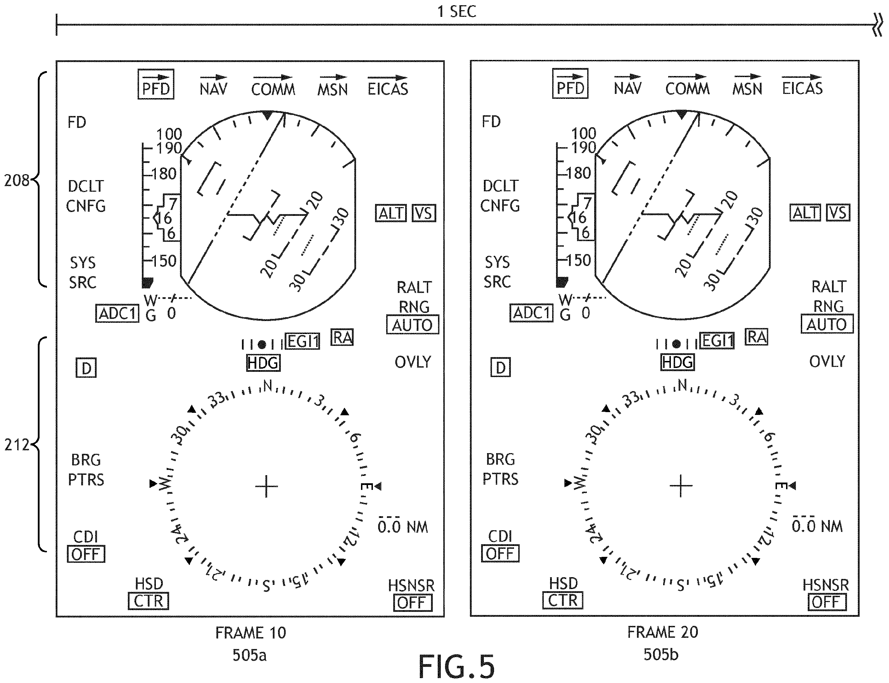

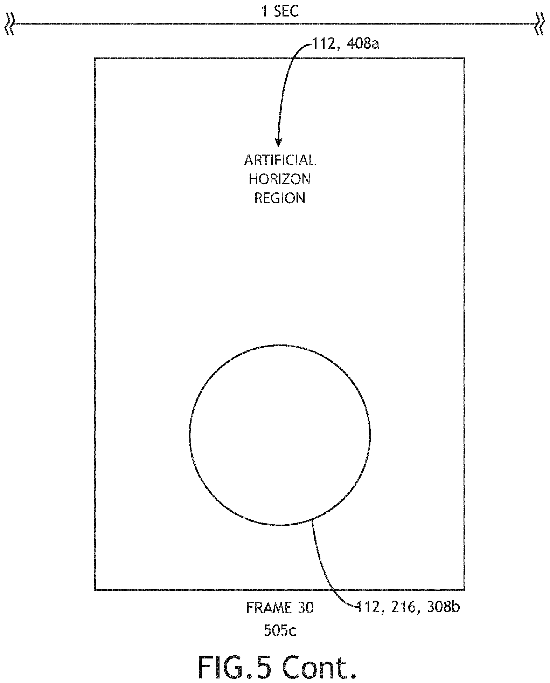

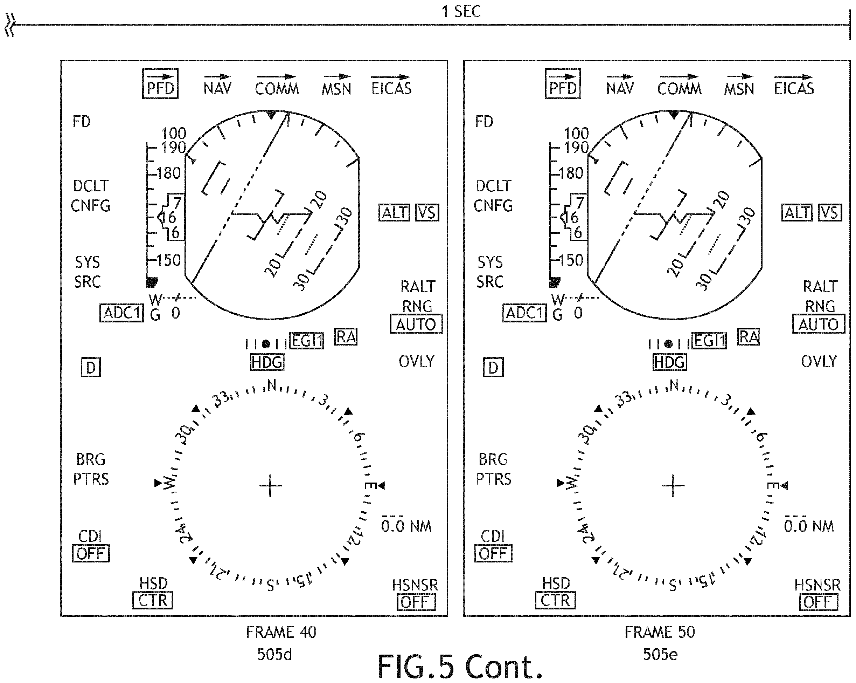

In another example, the imperceivable images 112 may include images that are included at a frame rate lower than can be perceivable (e.g., one frame of date per 60 frames in a 60 frames/sec system), as demonstrated in FIG. 5, in accordance with one or more embodiments of the disclosure. As shown in FIG. 5, screenshot data 505a-e from several frames (frames 10,20,30,40, and 50) from of the display 90 are displayed from one second of a video stream. Frames 10, 20, 40, and 50, (e.g., screenshot data 505 a-b, d-e) as well as other similar looking frames in the video stream, together form a perceivable image via persistence of vision. Screenshot data 505c represents a single frame (Frame 30) that that is not perceivable, as the image provided by the frame does not appear long enough to instill persistence of vision. Although the screenshot data 505c of frame 30 is not perceivable by humans, the screenshot data 505c is detectable by the camera 104, which codes the image into a display signal 120 containing imperceivable data. The detection and decoding of the screenshot 505C may require the system 100 to use known parsing methods to parse the particular frame. The imperceivable data may include instructions instructing the system 100 on how to interpret text, symbols, and/or symbology within the perceivable images 108 of neighboring frames (e.g., screenshot data 505 a-b, d-e), similar to methods detailed in FIGS. 2-4. The screenshot data 505c containing the imperceivable image 112 may be presented using any wavelength of light (e.g., visual band, infrared, or UV).

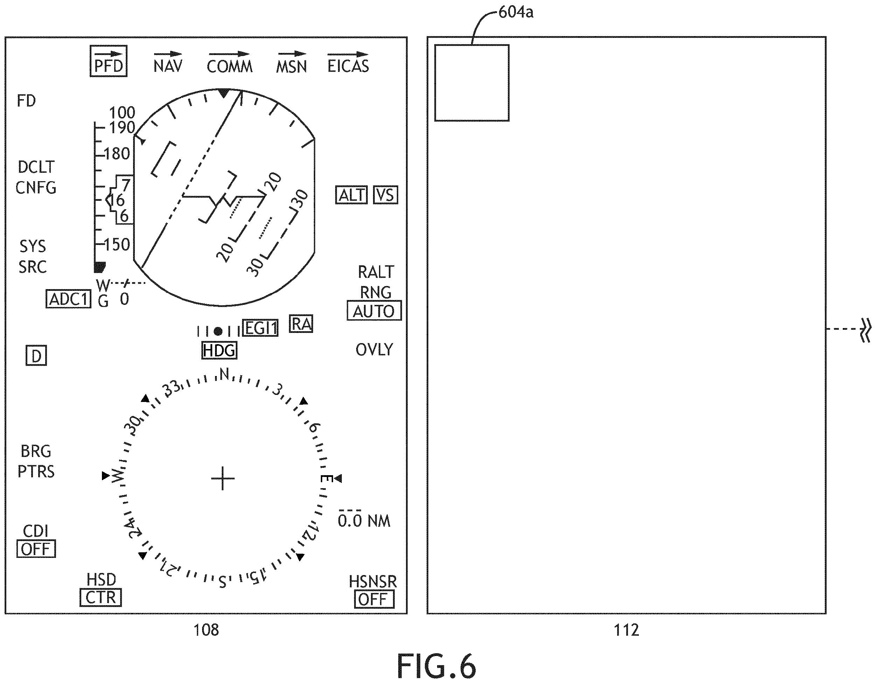

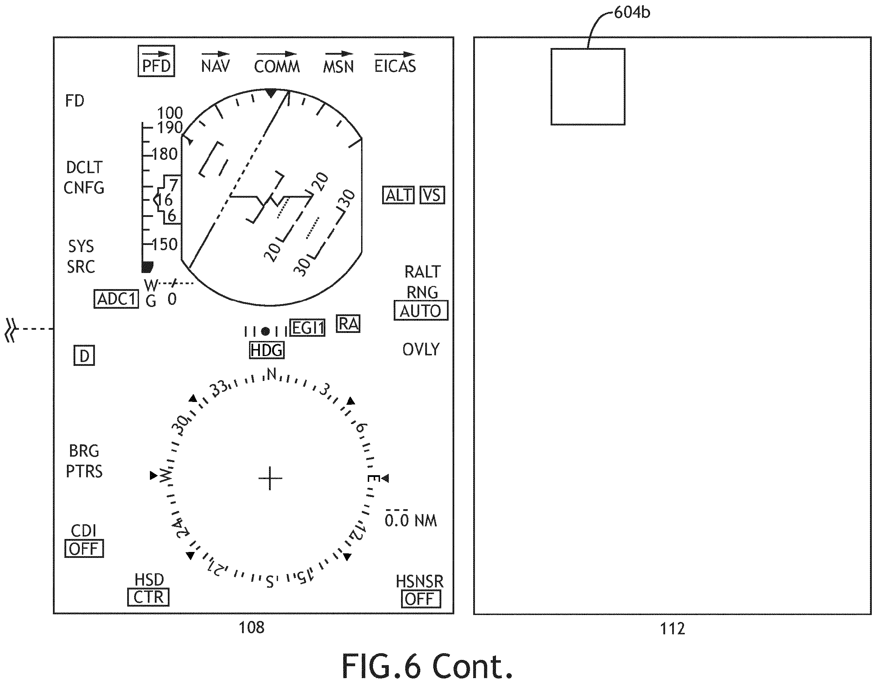

In some embodiments, the imperceivable image 112 data from the display signal 120 is compared directly to the imperceivable data in the input signal 132 (e.g., the system 100 looking to see if a symbol in the input signal 132 matches the display signal 120). For example, a pixel-to-pixel comparison may be performed using the system without reference to the perceivable images 108, as shown in FIG. 6, in accordance with one or more embodiments of the disclosure. For instance, the input signal 120, when displayed, may present a filled square 604a in the top left of display 90 (e.g., using either infrared/UV method of FIGS. 2-4 or the frame-rate method of FIG. 5). Once the camera has recorded the imperceivable data, the system 100 may then determine if the display has faithfully displayed the filled square. The system 100 may then generate an input signal 120 with the filled square 604b in a different test position. In this manner, the entirety of the display 90 may be tested as the perceivable images 108 are displayed. This direct comparison method may also be combined with the other methods shown in FIGS 2-5. This direct comparison method may also be performed in tandem with methods that specifically test only perceivable images 108.

In another example, the imperceivable data may include ultrasonic data. For example, the display 90 may include a speaker configured to emit a hypersonic (e.g., beyond human perception) sound that is recorded by a sound recorder communicatively coupled to, or integrated into, the system 100. The hypersonic sound may be delivered in a manner that corresponds to the displaying of the correlated perceivable image 108. A message encoded within the hypersonic sound may instruct and/or guide the system 100 in testing the perceivable image 108. For example, the message may instruct he system to focus on testing the artificial horizon region 208 (e.g., snapshot data 204a) that is currently being displayed.

In another example, the imperceivable images 112 may include a color variation. Many computer systems can display images with colors differences that are imperceivable to humans, but are readily identified as different by camera systems. A color-imperceivable based method would then work similarly to the imperceivable methods shown in FIGS. 2-4. For example, in referring to FIG. 2 the artificial horizon region 208 of snapshot data 204a may be configured as having a background color of black (e.g., color #000000 as per HTML hexadecimal coding). To create a bounding area similar to block outline 216, a similar sized and positioned outline of a square may be displayed with an imperceptibly different off-black background color of #0d0000.

In some embodiments, the imperceivable images 112 is configured as flash data. For example, the input signal 132 may be configured such that one or more portions of the display 90, such as the upper left corner similar to the filled square 604a, will flash on and off at rates too quick for the user to perceive, but in a manner that can be recorded by the camera 104 (e.g., as a flash signal) and converted to display data. The timing and/or intensity of the series of flashes may be configured as a coded message that the system 100 can decode and use in analyzing the perceivable images 108 that are correlated with the flash signal.

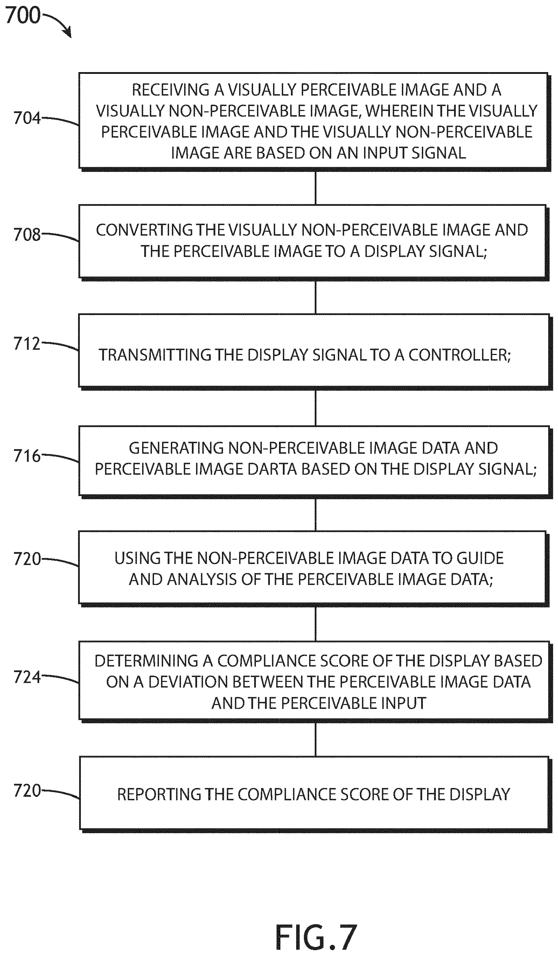

FIG. 7 is a flow chart illustrating a method 700 for determining the compliance of a display 90 to a reference, in accordance with one or more embodiments of the disclosure. The reference may refer to any type of quality reference, standard, or threshold that the display 90 must attain or pass (e.g., via inspection) in order for the display 90 to be utilized by a user. The reference may refer to a manufacturing standard, a guideline, a governmental/military standard, and the like.

In some embodiments, the method 700 includes a step 704 of receiving a visually perceivable image 108 and a visually imperceivable image 112, wherein the visually perceivable image and the visually imperceivable image are based on an input signal 132. For example, the display 90 may receive the input signal 132 from the database 128 that stores the perceivable image 108 with the inserted imperceivable image 112.

In some embodiments, the method 700 further includes a step 708 of converting the visually imperceivable image 108 and the perceivable image 112 to a display signal 120. The display signal 120 may be configured as a combined signal comprising data from both the visually imperceivable image 108 and the perceivable image 112, or configured as two separate signals with each separated signal comprising data from either the visually imperceivable image 108 or the perceivable image 112. In some embodiments, the system 100 may include one or more optical filters that facilitate the generation of separate display signals 120 with different wavelength ranges. For example, the optical filter may be disposed between the display 90 and the cameras 104.

In some embodiments, the method 700 further includes a step 712 of transmitting the display signal 120 to the controller 116. Once received by the controller the one or more processors 140 can initiate the analysis of the data signal via instructions provided via the memory 136.

In some embodiments, the method 700 further includes a step 716 of generating imperceivable image data and perceivable image data based on the display signal 120. For example, the one or more processors 140 may recognize a portion of the display signal 120 as the perceivable data, and form the perceivable data into a virtual image to compare against the perceivable input data that was initially sent to the display 90 via the database. The one or more processors 140 may also identify a portion of the display signal 120 as the imperceivable data (e.g., containing out-of-visual band data, non-visually persistent data, ultrasonic data, flash data, imperceivably differentially colored data, and the like), and identify or generate instructions based on the imperceivable data.

In some embodiments, the method 700 further includes a step 720 of using the imperceivable image data to guide an analysis of the perceivable image data. The imperceivable image data may be utilized via any technique or method described herein, such as those methods demonstrated in FIGS 2-6. For example, the imperceivable image data may define a bounded region to be focused upon, or to be removed from, further analysis. In another example, the imperceivable data may include text that describes, or otherwise guides the focus of the analysis. In another example, complex images that contain both text and symbology may be divided amongst the imperceivable images 112 and the perceivable images 108 so that the text is displayed as an imperceivable image portion and the symbology is displayed as a perceivable image portion, or vice versa (e.g., classification of the image into text or symbology simplifying the analysis). The analysis (e.g., comparison between the perceivable image data and the perceivable input) may utilize any type of OCR, image processing, object recognition software, or computer vision methods as described herein. For example, object recognition approaches may include Viola-Jones object detection, scale-invariant feature transform (SIFT), or histogram of oriented gradients (HOG) features.

In some embodiments, the method 700 further includes a step 724 of determining a compliance score of the display 90 based on a deviation between the perceivable image data and the perceivable input. For example, an analysis between the perceivable image data and the perceivable input that show perfect correlation would receive a high compliance score. In some embodiments, the method 700 further includes a step 728 of reporting the compliance score of the display (e.g., reporting the score to the user interface 124.

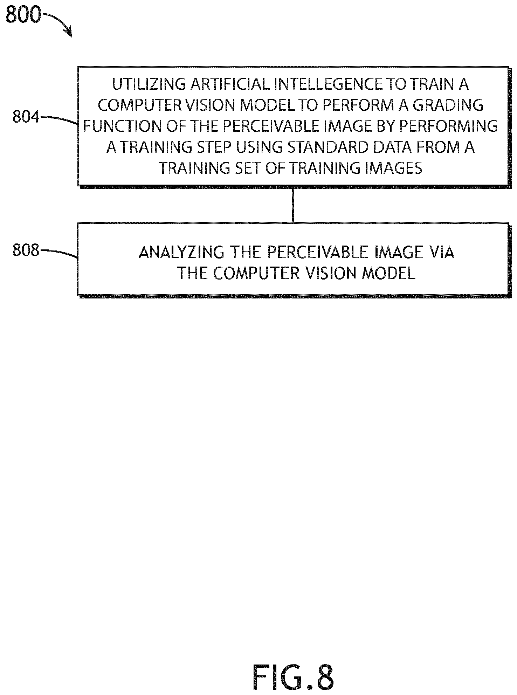

In some embodiments, the system 100 utilizes a computer vision model for determining the recognizing the text and/or the symbology of the either the perceivable image 108 or the imperceivable image 112. A method 800 for incorporating a computer vision model into the system 100 is illustrated in FIG. 8, in accordance with one or more embodiments of the disclosure.

In some embodiments, the method 800 includes a step 804 of utilizing artificial intelligence to train a computer vision model to perform a grading function of the perceivable image by performing a training step using reference data from a training set of training images. Training the computer vision model may include developing a neural network model via any method known. These network models and methods include, but are not limited to, you-only-look once (YOLO) models, region-based convolutional neural networks (e.g., R-CNN and derivatives), single-shot refinement neural network for object detection (RefineDet), Retina-Net, and Deformable convolutional networks. For example, the YOLO algorithm employs convolutional neural networks to detect objects in real-time, and requires a relatively simple single forward propagation through a neural network to detect objects (e.g., the convolutional neural network is used to predict class properties and bounding boxes simultaneously). Training the YOLO model involves collecting and annotating training images, defining configuration and architecture parameters for the model, executing a training routing via the training images, evaluating the trained model, and inferencing the model to produce a numeric score.

In some embodiments, the method 800 includes a step 808 of analyzing the perceivable image via the computer vision model. For example, the method may determine, via the computer vision model, that a portion of the perceivable image either symbology or text.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A test system, comprising:
a camera (104) configured to record images from a display (90) and transmit a display signal (120) based on recorded images, wherein the display (90) is configured to simultaneously display a visually perceivable image and a visually imperceivable image based on an input signal;
a controller (116) configured to receive the display signal and determine a compliance of the display to a reference comprising:
one or more processors (140); and
a memory (136) with instructions stored upon, wherein the instructions, upon execution by the one or more processors, cause the one or more processors to:
receive the display signal;
generate imperceivable image data and perceivable image data based on the display signal;
use the imperceivable image data to guide an analysis of the perceivable image data;
determine a compliance score of the display based on a deviation between the perceivable image data and perceivable input of the input signal; and
report the compliance score of the display.

2. The test system of claim 1, wherein using the imperceivable image data to guide an analysis of the perceivable image data includes:
utilizing artificial intelligence to train a computer vision model to perform a grading function of the perceivable image by performing a training step using reference data from a training set of training images; and
testing the perceivable image via the computer vision model.

3. The test system of claim 1 or 2, wherein the imperceivable image is configured to be presented in a non-visible wavelength.

4. The test system of claim 3, wherein the non-visible wavelength is configured as an infrared wavelength.

5. The test system of claim 4, wherein the non-visible wavelength is configured as an ultraviolet wavelength.

6. The test system of any preceding claim, wherein the imperceivable image configured to be presented as an image with an imperceivable frame rate.

7. The test system of claim 6, wherein the controller (116) is configured to parse frames containing the imperceivable data from the recorded images.

8. The test system of claim 3, further comprising an optical filter disposed between the display and the camera configured to filter out visible wavelengths.

9. The test system of claim 2, wherein utilizing artificial intelligence includes developing a neural network model for object detection.

10. The test system of claim 9, wherein developing the neural network model includes training the network model via a you only look once (YOLO) algorithm.

11. A method for determining a compliance of a display to a reference, comprising:
receiving a visually perceivable image and a visually imperceivable image, wherein the visually perceivable image and the visually imperceivable image are based on an input signal;
converting the visually imperceivable image and a perceivable image to a display signal;
transmitting the display signal to a controller;
generating imperceivable image data and perceivable image data based on the display signal;
using the imperceivable image data to guide an analysis of the perceivable image data;
determining a compliance score of the display based on a deviation between the perceivable image data and a perceivable input; and
reporting the compliance score of the display.

12. The method of claim 11, further comprising:
utilizing artificial intelligence to train a computer vision model to perform a grading function of the perceivable image by performing a training step using reference data from a training set of training images; and
analyzing the perceivable image via the computer vision model.

13. The method of claim 11 or 12, wherein the visually imperceivable image is configured to be presented in a non-visible wavelength.

14. The method of claim 13, wherein the non-visible wavelength is configured as an infrared wavelength.

15. The method of any of claims 11-14, wherein the imperceivable image is configured to be presented as an image with an imperceivable frame rate.
